# EUROPEAN PATENT SPECIFICATION

(11) **EP 3 618 303 B1**
(45) Date of publication and mention of the grant of the patent: **11.05.2022**
(21) Application number: 18793895.6
(22) Date of filing: 23.04.2018
(51) Int. Cl.: H04B 7/10

(54) **METHOD AND DEVICE FOR USE IN INDICATING ANTENNA POLARIZATION DIRECTION IN WIRELESS NETWORK**
VERFAHREN UND VORRICHTUNG ZUR VERWENDUNG BEI DER ANZEIGE DER ANTENNENPOLARISATIONSRICHTUNG IN EINEM DRAHTLOSEN NETZWERK
PROCÉDÉ ET DISPOSITIF DESTINÉS À ÊTRE UTILISÉS DANS L'INDICATION D'UNE DIRECTION DE POLARISATION D'ANTENNE DANS UN RÉSEAU SANS FIL

(30) Priority: 05.05.2017 CN 201710313293
(43) Date of publication of application: 04.03.2020
(73) Proprietor: Huawei Technologies Co., Ltd., Longgang District Shenzhen, Guangdong 518129 (CN)
(72) Inventor: WU, Ji, Shenzhen Guangdong 518129 (CN); LIN, Yingpei, Shenzhen Guangdong 518129 (CN); HUANG, Lei, Shenzhen Guangdong 518129 (CN)
(74) Representative: Maiwald Patent- und Rechtsanwaltsgesellschaft mbH
(86) International application number: PCT/CN2018/084038
(87) International publication number: WO 2018/201922

(56) References cited:
- WO-A1-2016/171434
- WO-A1-2017/067378
- CN-A- 101 848 534
- CN-A- 102 833 768
- CN-A- 104 023 361
- CN-A- 104 871 616
- US-A1- 2017 033 848
- KYUNGTAE JO (LG ELECTRONICS): "Multi-Beamforming in Polarized Channels for 11ay ; 11-16-0092-00-00ay-multi-beamforming-in-po larized-channels-for-11ay", IEEE DRAFT; 11-16-0092-00-00AY-MULTI-BEAMFORMING-IN-PO LARIZED-CHANNELS-FOR-11AY, IEEE-SA MENTOR, PISCATAWAY, NJ USA, vol. 802.11ay, 18 January 2016 (2016-01-18), pages 1-7, XP068104874, [retrieved on 2016-01-18]
- JAMES WANG (MEDIATEK): "Antenna Polarization Capability Format ; 11-16-1433-03-00ay-antenna-polarization-ca pability-format", IEEE DRAFT; 11-16-1433-03-00AY-ANTENNA-POLARIZATION-CA PABILITY-FORMAT, IEEE-SA MENTOR, PISCATAWAY, NJ USA , vol. 802.11ay, no. 3 9 November 2016 (2016-11-09), pages 1-10, XP068110841, Retrieved from the Internet: URL:https://mentor.ieee.org/802.11/dcn/16/ 11-16-1433-03-00ay-antenna-polarization-ca pability-format.pptx [retrieved on 2016-11-09]

## Description

### TECHNICAL FIELD

The present invention relates to the field of communications technologies, and in particular, to a method and an apparatus for indicating an antenna polarization direction in a wireless network.

### BACKGROUND

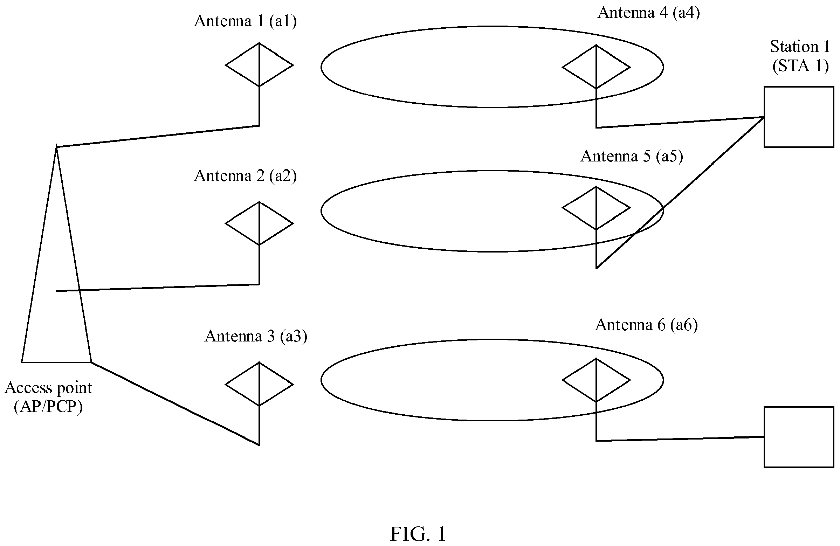

802.11ay is a WLAN (Chinese: wireless local area network, English: Wireless Local Area Network) standard based on an unlicensed frequency band of 60 GHz. 802.11ay is evolved from 802.11ad. 802.11ay supports SU-MIMO (English: Single User-multiple input and multiple output, Chinese: single user multiple-input multiple-output) and MU-MIMO (English: Multi User-multiple input and multiple output, Chinese: multi-user multiple-input multiple-output) technologies, to be specific, a plurality of antennas are used to implement high-rate transmission. An electromagnetic wave signal greatly attenuates at the frequency band of 60 GHz. Therefore, all devices supporting 802.11ad/ay use a directional antenna instead of an omnidirectional antenna at a frequency band below 60 GHz. The device supporting 802.11ad/ay produces a directional beam through coordination between a plurality of antennas. Each antenna can produce a directional beam. As shown in FIG. 1, an AP (English: Access Point, Chinese: access point) includes three antennas that can simultaneously send directional signals to antennas a4 and a5 of a STA 1 and an antenna a6 of a STA 2. This is an MU-MIMO working mode.

An antenna of the device supporting 802.11ay performs transmission in a directional manner. In this case, the antenna may use a linear polarization or circular polarization manner. When a receive station and a transmit station work in different polarization manners, maximum attenuation of an unmatched signal of the antenna is 3 dB; or when the receive station and the transmit station work in a same polarization manner, maximum signal attenuation is 0 dB to infinity (the attenuation may be greater than 12 dB in an actual system, leading to lower communication efficiency or a communication failure). In the prior art, there is no specific design for indicating a polarization manner in a device transmission process in 802.11ay. The patent application US 2017/0033848 is about indicating a polarization direction of transmitter antennas in an information element of a control signal. The technical contribution to the WLAN specification from James Wang, Mediatek: "Antenna Polarization Capability Format", IEEE 802.11-16/1433r2, 7. Nov. 2016, defines an antenna polarization capability field to be used to indicate polarization directions in MIMO communications.

### SUMMARY

In view of this, this application is mainly intended to provide a method for indicating an antenna polarization direction in a wireless network and a corresponding indication apparatus, to provide a design for a polarization manner in a device transmission process in 802.11ay.

The invention is set out in the appended independent claims. The dependent claims define additional more detailed embodiments.

This application further discloses a computer readable storage medium, including an instruction, where when the instruction runs on a computer, the computer performs the foregoing method and the corresponding design.

According to the method and the apparatus, system overheads for polarization information indication are reduced.

### BRIEF DESCRIPTION OF DRAWINGS

FIG. 1 shows a directional working mode in 802.11ay;
FIG. 2 is an existing flowchart of exchanging polarization information;
FIG. 3 is a schematic diagram of a beacon interval;
FIG. 4 is a frame structure diagram of a beacon frame;
FIG. 5 is a schematic structural diagram of a polarization information element;
FIG. 6 is an interaction flowchart 1 according to Embodiment 2 of this application;
FIG. 7 is an interaction flowchart 2 according to Embodiment 2 of this application;
FIG. 8 is an interaction diagram of SU-MIMO according to Embodiment 3 of this application;
FIG. 9 is an interaction diagram of MU-MIMO according to Embodiment 3 of this application; and
FIG. 10 is a structural diagram of a physical apparatus of a communications device according to an embodiment of this application.

### DESCRIPTION OF EMBODIMENTS

The following further describes specific embodiments of the present invention in detail with reference to the accompanying drawings.

In FIG. 1, AP/PCP indicates a wireless access point, a1/a2/a3/a4/a5/a6 indicates an antenna, and STA 1/STA 2 indicates a station.

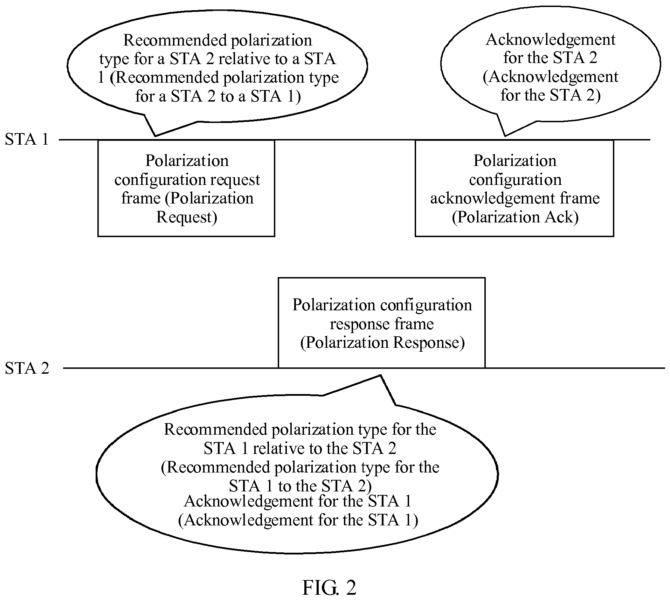

In the prior art, there are at least the following implementations for indicating a polarization manner in a device transmission process, as shown in FIG. 2. FIG. 2 shows a polarization configuration request frame (English: Polarization Request), a polarization configuration response frame (English: Polarization Response), and a polarization configuration acknowledgement frame (English: Polarization Ack).

After an initiating station and a target station establish a communication link and exchange their respective polarization capabilities, the station 1 sends a polarization configuration request frame to the station 2; the station 2 acknowledges the request from the station 1, and sends a polarization configuration of the station 2 to the station 1; and then the station 1 acknowledges the polarization feedback frame from the station 2. In this way, the STA 1 and the STA 2 determine polarization configurations required for mutual communication. A disadvantage of the prior art is that because polarization configurations need to be separately exchanged between stations, when an access point AP performs MU-MIMO communication with a plurality of stations, the AP needs to sequentially interact with the plurality of stations, and consequently system efficiency is reduced.

This application provides three embodiments. In the three embodiments, a procedure of exchanging polarization configurations between stations or between an AP and a station is performed by using a beacon frame, a request to send RTS frame/clear to send CTS frame/denial to send DTS frame, or a MIMO setup frame, and a corresponding frame structure is provided.

It should be noted that in this patent application, an initiating station and a source station are equivalent concepts, a target station and a destination station are equivalent concepts, and polarization information and a polarization manner are equivalent concepts.

### Embodiment 1

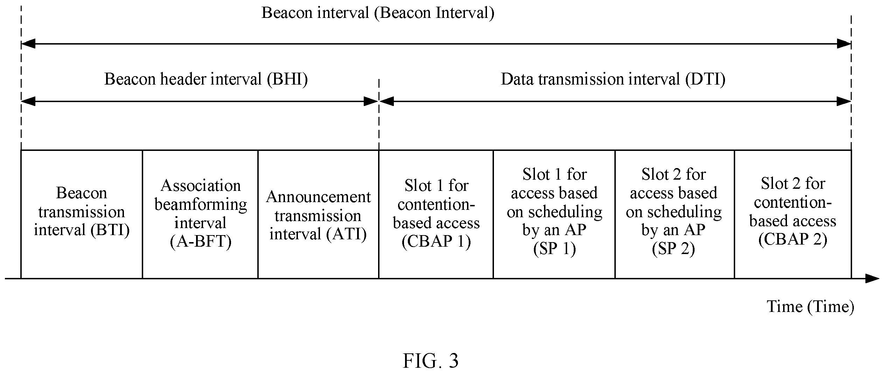

As shown in FIG. 3, a beacon interval (beacon interval) of an 802.11ay device includes a beacon header interval (BHI) and a data transmission interval (DTI). The beacon header interval includes a beacon transmission interval (BTI), an association beamforming interval (A-BFT), and an announcement transmission interval (ATI). In the data transmission interval, there are two access modes: CBAP (contention-based access) and SP (access based on scheduling by an AP).

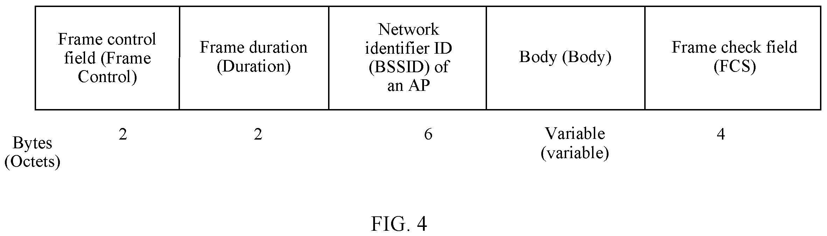

A structure of a beacon frame sent in the beacon transmission interval (BTI) is shown in FIG. 4. FIG. 4 shows a frame control field (English: Frame control), frame duration (English: Duration) (which indicates an end time of a last beacon frame because a plurality of beacon frames may be sent in the BTI), a network identifier ID (English: BSSID) of the AP, and a frame check field (English: FCS).

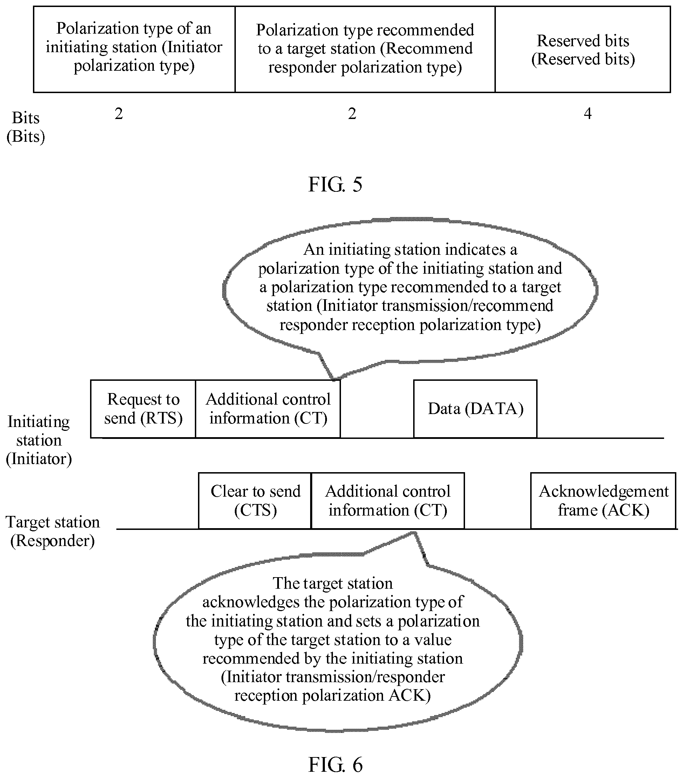

To indicate related polarization information in a beacon frame, a 1-byte polarization information element needs to be added to an existing beacon frame. A structure of the polarization information element is shown in FIG. 5. FIG. 5 shows a polarization type of an initiator (English: Initiator polarization type) of the AP, for example, a polarization type, such as circular polarization or linear polarization, and a polarization type recommended to a responder (English: Recommend responder polarization type), for example, a polarization type that is recommended to a STA and that is selected for receiving a beacon, frame or a polarization type that is recommended to a STA and that is used in the A-BFT that follows the BTI. Two bits are used to indicate a polarization manner of the AP; two bits are used to indicate a polarization manner that is recommended by the AP to the STA for receiving, or may be used to indicate a polarization manner that is recommended to the STA for subsequently sending a sweeping frame in the A-BFT; and the remaining four bits are reserved bits.

In the technical solution in Embodiment 1, a new polarization manner information element is added to a beacon frame that supports the 802.11ay standard, so that a STA can select, based on the polarization manner information element, a proper polarization manner to receive a beacon frame and send a beam sweeping frame in an A-BFT. Because the beacon frame is of a broadcast type, no separate interaction with each STA is required, thereby reducing system overheads.

### Embodiment 2

In a data transmission interval DTI, a polarization type of a source station/AP and a polarization type for a target station may be added to and indicated in a control trailer (additional control information) in RTS frame/CTS frame /DTS frame by the source station/AP, as shown in FIG. 6. FIG. 6 shows request to send (English: RTS: request to send) frame, clear to send (English: CTS: clear to send) frame, additional control information (English: CT: control trailer), denial to send (English: DTS: denial to send) frame, an acknowledgement frame (English: ACK) frame, and data (English: Data) frame.

An initiating station indicates, by using additional control information, a polarization type of the initiating station and a polarization type recommended to a target station. The target station acknowledges the polarization type of the initiating station and sets a polarization type of the target station to a value recommended by the initiating station. Subsequently, data transmission is performed based on the negotiated polarization type.

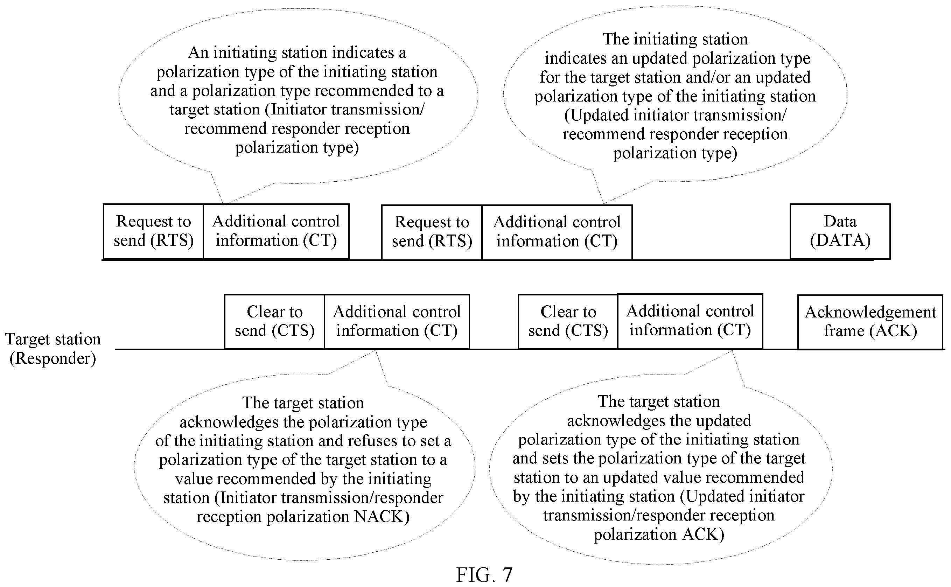

In FIG. 7, an initiating station indicates, by using additional control information, a polarization type of the initiating station and a polarization type recommended to a target station. The target station acknowledges the polarization type of the initiating station and refuses to set a polarization type of the target station to a value recommended by the initiating station (the information may be carried in a DTS frame, or may be carried in a CTS frame). After receiving information indicating that the target station refuses to set the polarization type to the recommended value, the initiating station indicates an updated polarization type for the target station and/or an updated polarization type of the initiating station by using additional control information. If the target station accepts the updated polarization type, the target station sends CTS and acknowledges the foregoing polarization typ. Subsequently, data transmission is performed based on the negotiated polarization type.

A structure of an additional control information element in this embodiment is shown in Table 1. The additional control information element includes the following fields: Channel aggregation: a channel aggregation indication; BW: bandwidth, which is a working channel indication, Primary channel number: primary channel number; CTCS: CRC check bits; and Reserved: information about reserved bits.

It can be learned from the foregoing interaction procedure that in this embodiment, four bytes are extracted from the reserved bits to indicate the polarization types of the initiating station and the target station.

**Table 1 Frame structure of an additional control information element**

| Field | Number of bits | Start bit | Description |
|---|---|---|---|
| Channel Aggregation channel aggregation indication | 1 | 1 | This field is set to 0 for a channel bonding or single 2.16 GHz channel PPDU. This field is set to 1 for a channel aggregation PPDU. |
| BW Working channel indication | 8 | 2 | This field indicates the bandwidth of the PPDU. If a bit is set to 1, it indicates that the corresponding channel is used for the PPDU transmission. A bit 0 corresponds to a channel 1, a bit 1 corresponds to a channel 2, and so on. |
| Primary Channel Number primary channel number | 3 | 10 | This field contains the 3 LSBs of the primary channel number of the BSS minus one. |
| CTCS CRC check bits | 16 | 13 | This field contains the CRC-16 computed over the content of the control trailer. This field is computed as defined in section 20.3.7 |
| Reserved: information about reserved bits | 116 | 29 | This field is set to 0 by the transmitter and ignored by the receiver. |

In the technical solution in Embodiment 2, a polarization manner indication is added to a control trailer of an RTS/CTS/DTS frame in 802.11ay, and a corresponding interaction procedure between the initiating station and the target station is provided, so that a polarization manner is exchanged more flexibly between stations.

### Embodiment 3

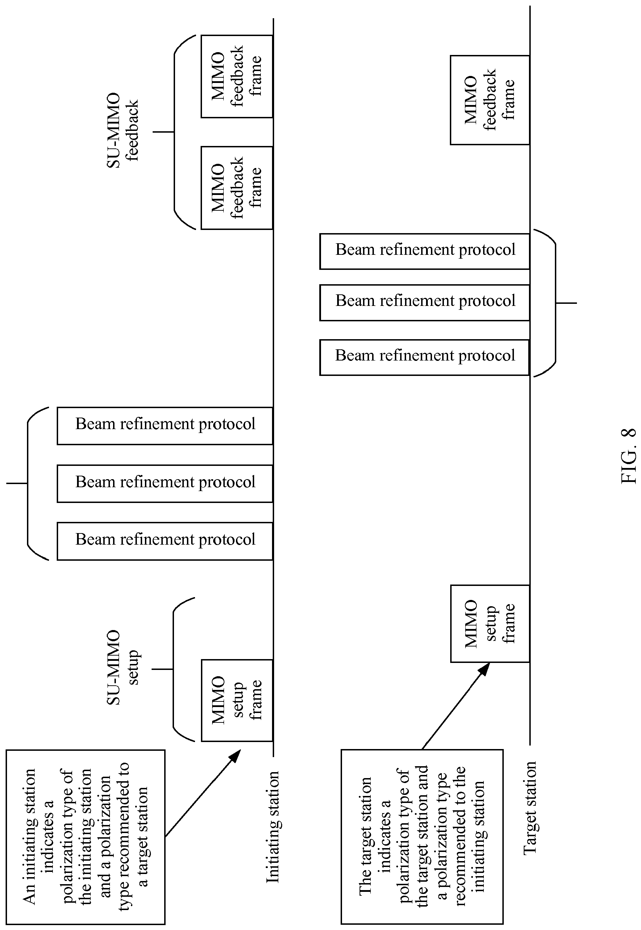

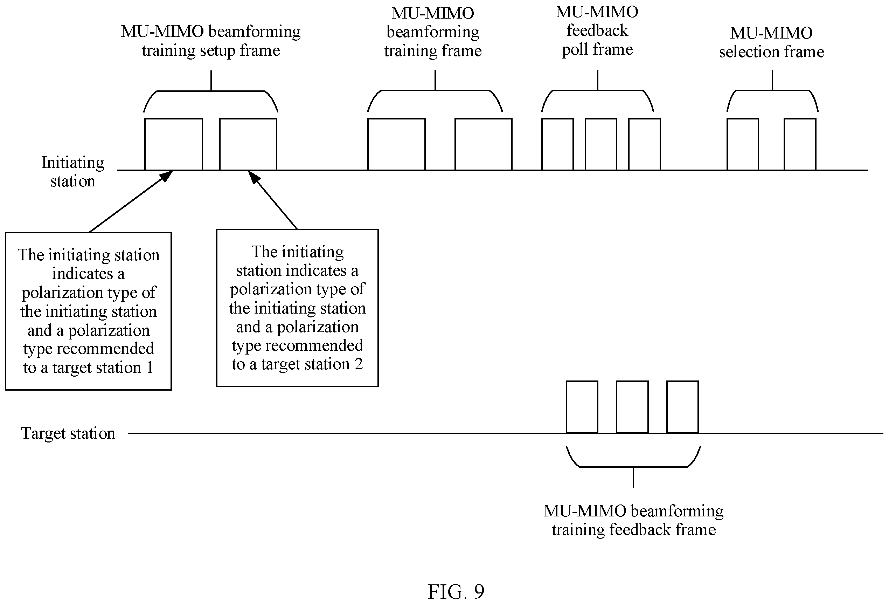

Polarization configuration information of an initiating station and a target station may be exchanged as a MIMO setup frame in an SU-MIMO BF procedure shown in FIG. 8, or may be exchanged as an MU-MIMO BF setup frame in an MU-MIMO BF procedure shown in FIG. 9. FIG. 8 shows a MIMO setup frame (English: MU MIMO setup frame), a beam refinement protocol (English: BRP (beam refinement protocol)) frame, and a MIMO feedback frame (English: MIMO feedback frame). FIG. 9 shows a multi-user MIMO beamforming training setup frame (English: MU-MIMO BF training setup frame), a multi-user MIMO beamforming training frame (English: MU-MIMO BF training frame), a MIMO feedback poll frame (English: MIMO feedback Poll frame), a multi-user MIMO beamforming training feedback frame (English: MU-MIMO FBs frame), and a multi-user MU-MIMO selection frame (English: MU-MIMO selection frame).

An SU-MIMO interaction procedure is as follows: The initiating station and the target station exchange polarization configurations by using polarization information indicated by a MIMO setup control field in a MIMO setup frame (setup frame), and then the initiating station and the target station perform beamforming training by using a beam refinement protocol (beam refinement protocol), and only after completing training, the initiating station and the target station feed back a beam training result by using a MIMO feedback frame (MIMO feedback frame).

An MU-MIMO interaction procedure is as follows: An AP sequentially sends a MIMO setup control field in an MU-MIMO beamforming training setup frame (MU-MIMO BF setup frame) to a plurality of stations to indicate a polarization configuration used by the AP, then the AP performs beamforming training by using a beam refinement protocol (beam refinement protocol) frame, and after completing training, the AP sequentially obtains beam training results of all STAs by using a MIMO feedback poll frame (MIMO feedback Poll frame), selects, based on the results fed back by all the STAs, a group of STAs to perform MU-MIMO transmission, and notifies the selected STAs by using an MU-MIMO selection frame (MU-MIMO selection frame).

Fields in the SU/MU MIMO setup frame are shown in Table 2, and polarization information exchanged between stations is included in a MIMO setup control information element.

**Table 2 Structure of an SU/MU MIMO setup frame**

| Order | Information |
|---|---|
| 1 | Category: frame type (action frame) |
| 2 | Unprotected DMG Action: unprotected DMG action frame |
| 3 | Dialog Token: unique identifier for exchanging a frame between stations |
| 4 | MIMO Setup Control element MIMO: setup control information element |
| 5 | One or more MIMO EDMG BRP packet Configuration elements: MIMO EDMG beam refinement packet configuration information elements |

The MIMO setup control element is shown in Table 3.

**Table 3 MIMO setup control element frame**

| Field | Size | Meaning |
|---|---|---|
| Element ID | 8 bits | Information element ID |
| Length | 8 bits | Information element length |
| Element ID Extension | 8 bits | Information element extension ID |
| SU/MU | 1 bit | This field is set to 1 to indicate SU-MIMO beamforming. Otherwise, this field is set to 0. This field is an SU/MU MIMO indication bit. |
| Initiator | 1 bit | This field is set to 1 to indicate the sender is the initiator. Otherwise, this field is set to 0. This field shall be set to 1 when the SU/MU field is set to 0. This field is an indication bit of the initiating station. |
| L-TX-RX | 8 bits | This field indicates the number of consecutive TRN-Units for which the transmit AWV remains with the same AWV configuration requested by the sender as part of SU-MIMO BF training. This field is reserved when the SU/MU field is set to 0. This field is a training unit length indication for beamforming training. |
| Link Type | 1 bit | This field is set to 1 to indicate initiator link. Otherwise, this field is set to 0. This field shall be set to 1 when the SU/MU field is set to 0. This field is a link indication bit of the initiating station/target station. |
| Decision Maker | 1 bit | This field is set to 1 to indicate that initiator is decision maker for the link specified by the link type field. Otherwise, this field is set to 0. This field shall be set to 1 when the SU/MU field is set to 0. |
| | | This field is an indication bit of a link decision maker. |
| MIMO FBCK-REQ | 8 bits | This field indicates channel measurement feedback requested for the link specified by the link type field. This field is a link channel measurement feedback field. |
| Number of AIDs (N) | 3 bits | This field indicates the number of intended responders for MU-MIMO beamforming. This field is set to 0 when the SU/MU field is set to 1. This field is an indication of an MU-MIMO associated station. |
| AID 1 | 8 bits | This field indicates the AID of the first intended responder. This field is an association ID (association ID) of an SU/MU-MIMO associated station 1. |
| ... | | |
| AID N | 8 bits | This field indicates the AID of the N intended responder. This field is an association ID (association ID) of an MU-MIMO associated station N. |

In an SU-MIMO scenario, two bits or four bits are added to the MIMO setup control information element to indicate polarization information of the initiating station/target station, as shown in Table 4. The polarization information of the initiating station and the target station may be included in different fields. For example, the polarization information of the initiating station may be after the indication bit of the initiating station, and the polarization information of the target station may be placed after the AID 1 indication bit. In another possible manner, the polarization information of the initiating station and the target station is combined, and is placed after the AID N indication bit.

**Table 4 Polarization information in an SU-MIMO scenario**

| | | |
|---|---|---|
| Initiator's polarization type | 1 or 2 bit(s) | One bit may be used to indicate whether a polarization type of the initiating station is circular polarization or linear polarization. |
| Polarization indication of an initiator | | Two bits may be used to indicate whether a polarization type of the initiating station is right-hand circular polarization, left-hand circular polarization, horizontal polarization, or vertical polarization. |
| Responder's polarization type Polarization indication of a receiver | 1 or 2 bit(s) | One bit may be used to indicate whether a polarization type of the target station is circular polarization or linear polarization. Two bits may be used to indicate whether a polarization type of the target station is right-hand circular polarization, left-hand circular polarization, horizontal polarization, or vertical polarization. |

Optionally, a 1-bit polarization type indication may be added to the MIMO setup control information element to indicate whether 1-bit information or 2-bit information is used to indicate a polarization configuration of a station, as shown in Table 5.

**Table 5 Polarization information in an SU-MIMO scenario**

| | | |
|---|---|---|
| Polarization indication | 1 bit | Used to indicate whether polarization information of the initiating station/target station is indicated by using one bit or two bits. |
| Initiator's polarization type Polarization indication of an initiator | 1 or 2 bit(s) | One bit may be used to indicate whether a polarization type of the initiating station is circular polarization or linear polarization. Two bits may be used to indicate whether a polarization type of the initiating station is right-hand circular polarization, left-hand circular polarization, horizontal polarization, or vertical polarization. |
| Responder's polarization type Polarization indication of a | 1 or 2 bit(s) | One bit may be used to indicate whether a polarization type of the target station is circular polarization or linear polarization. Two bits may be used to indicate whether a |
| receiver | | polarization type of the target station is right-hand circular polarization, left-hand circular polarization, horizontal polarization, or vertical polarization. |

In an MU-MIMO scenario, two bits may be added to the MIMO setup control information element to indicate polarization information of the initiating station and 2×N bits may be added to indicate polarization information of the target station, where N is a quantity of target stations. The polarization information of the initiating station and the polarization information of the target station may be separated. For example, the polarization information of the initiating station may be after the indication bit of the initiating station, and the polarization information of the target station may be sequentially placed after the AID 1 indication bit, an AID 2 indication bit, ..., and the AID N indication bit, as shown in Table 6. In another possible manner, the polarization information of the initiating station and the target station is combined, and is placed after the AID N indication bit, As shown in Table 7.

**Table 6 Polarization information in an MU-MIMO scenario**

| | | |
|---|---|---|
| Initiator's polarization type Polarization indication of an initiator | 1 or 2 bit(s) | One bit may be used to indicate whether a polarization type of the initiating station is circular polarization or linear polarization. Two bits may be used to indicate whether a polarization type of the initiating station is right-hand circular polarization, left-hand circular polarization, horizontal polarization, or vertical polarization. |
| Responder 1's polarization type Polarization indication of a receiver | 1 or 2 bit(s) | One bit may be used to indicate whether a polarization type of the target station is circular polarization or linear polarization. Two bits may be used to indicate whether a polarization type of the target station is right-hand circular polarization, left-hand circular polarization, horizontal polarization, or vertical polarization. |
| ··· | | |
| Responder N's polarization type Polarization indication of a receiver | 1 or 2 bit(s) | One bit may be used to indicate whether a polarization type of the target station is circular polarization or linear polarization. Two bits may be used to indicate whether a polarization type of the target station is right-hand circular polarization, left-hand circular polarization, horizontal polarization, or vertical polarization. |

**Table 7 Polarization information in an MU-MIMO scenario**

| | | |
|---|---|---|
| Polarization indication | 1 bit | Used to indicate whether polarization information of the initiating station/target station is indicated by using one bit or two bits. |
| Initiator's polarization type Polarization indication of an initiator | 1 or 2 bit(s) | One bit may be used to indicate whether a polarization type of the initiating station is circular polarization or linear polarization. Two bits may be used to indicate whether a polarization type of the initiating station is right-hand circular polarization, left-hand circular polarization, horizontal polarization, or vertical polarization. |
| Responder 1's polarization type Polarization indication of a receiver | 1 or 2 bit(s) | One bit may be used to indicate whether a polarization type of the target station is circular polarization or linear polarization. Two bits may be used to indicate whether a polarization type of the target station is right-hand circular polarization, left-hand circular polarization, horizontal polarization, or vertical polarization. |
| ··· | | |
| Responder N's polarization type Polarization indication of a receiver | 1 or 2 bit(s) | One bit may be used to indicate whether a polarization type of the target station is circular polarization or linear polarization. Two bits may be used to indicate whether a polarization type of the target station is right-hand circular polarization, left-hand circular polarization, horizontal polarization, or vertical polarization. |

In the technical solution in Embodiment 3, a polarization manner indication is added to a setup control information element in an SU/MU MIMO setup frame in 802.11ay, and a corresponding interaction procedure between the initiating station and the target station is provided, so that a polarization manner is exchanged more flexibly between stations, thereby reducing overheads of separately exchanging polarization information.

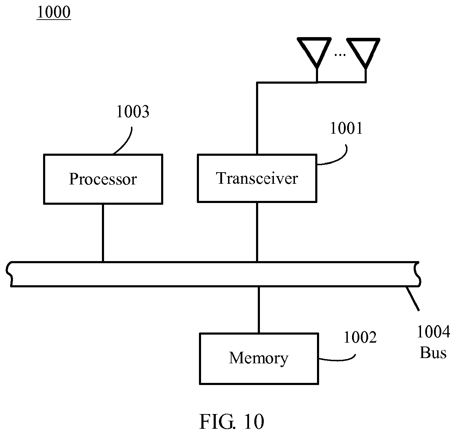

As shown in FIG. 10, this application further provides a communications device 1000. The communications device may be an access point, a station, or a DSP or an ASIC or a chip for implementing a related function. The communications device 1000 includes a memory 1002, a transceiver 1001, and a processor 1003.

The memory 1002 is configured to store a program. The memory may be a RAM (English: Random Access Memory, Chinese: random access memory), a ROM (English: Read-Only Memory, Chinese: read-only memory), or a flash memory. The memory may be independently located in the communications device, or may be located in the processor 1003.

The transceiver 1001 is configured to transmit the frames in the foregoing three embodiments.

The processor 1003 is configured to execute the program stored in the memory, to perform the method in the foregoing three embodiments.

The transceiver 1001, the memory 1002, and the processor 1003 are connected to each other by using a bus 1004.

All or some of the foregoing embodiments may be implemented by software, hardware, firmware, or any combination thereof. When software is used for implementation, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general purpose computer, a dedicated computer, a computer network, or another programmable apparatus. The computer instructions may be stored in a computer readable storage medium, or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (English: Digital Subscriber Line, DSL for short)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD (English: Digital Video Disc, Chinese: digital video disc), a semiconductor medium (for example, a solid state disk (English: Solid State Disk, SSD for short)), or the like.

## Claims

1. A method for indicating an antenna polarization direction in a wireless network, comprising:
sending, by a source station to a target station, polarization information of the source station and polarization information recommended to the target station for receiving by the target station; and
receiving, by the source station, a message sent by the target station, wherein the message comprises polarization information of the target station and polarization information of the source station that is acknowledged or negotiated by the target station.

2. The method according to claim 1, wherein the sending, comprising:
sending, by the source station, a beacon frame, wherein the beacon frame comprises a polarization information element, and the polarization information element comprises the polarization information of the source station and the polarization information recommended to the target station for receiving.

3. The method according to claim 1, wherein the sending, comprising:
sending, by the source station, a single user multiple-input multiple-output setup, SU-MIMO Setup, frame, wherein the SU-MIMO setup frame comprises the polarization information of the source station and the polarization information recommended to the target station for receiving.

4. The method according to claim 1, wherein the sending, comprising:
sending, by the target station, the SU-MIMO setup frame, wherein the SU-MIMO setup frame comprises the acknowledged polarization information of the source station and the polarization information of the target station.

5. The method according to claim 1, wherein the sending, comprising:
sending a plurality of MU-MIMO setup frames, wherein the plurality of MU-MIMO setup frames sequentially comprises, a polarization direction of the source station and the polarization information recommended to the target station for receiving.

6. The method according to claim 1, wherein, the sending, comprising:
sending a request to send, RTS, frame, by the source station, wherein a control trailer field of the RTS frame comprises the polarization information of the source station and the polarization information recommended to the target station for receiving; and
wherein the receiving, comprising:
receiving, by the source station, a clear to send, CTS, frame from the target station if the target station agrees with a setting of the source station, wherein a control trailer field of the CTS frame comprises the polarization information of the target station and the acknowledged polarization information of the source station; or
receiving, by the target station, a denial to send, DTS, frame if the target station negotiates with the source station, wherein a control trailer field of the DTS frame comprises a new recommended value of the polarization information of the source station, and the method further comprising: performing negotiation again, and repeating a negotiation step.

7. The method according to claim 6, wherein the DTS frame is replaced with the CTS frame.

8. The method according to any one of claims 1 to 7, wherein the polarization information of the source station indicates a polarization type of the source station; and the polarization information recommended to the target station for receiving indicates a recommended polarization type to the target station for receiving.

9. The method according to claim 8, wherein the method further comprising, sending a polarization indication indicating whether the polarization information of the initiating station/target station comprises one bit or two bits.

10. The method according to claim 9, wherein the polarization information of the source station comprises one bit, and polarization type comprises: a circular polarization or a linear polarization; or
the polarization information of the source station comprises two bits, and the polarization type comprises: right-hand circular polarization, left-hand circular polarization, horizontal polarization, or vertical polarization.

11. The method according to claim 9, wherein the polarization information recommended to the target station comprises one bit, and polarization type comprises: a circular polarization or a linear polarization; or
the polarization information recommended to the target station comprises two bits, and the polarization type comprises: right-hand circular polarization, left-hand circular polarization, horizontal polarization, or vertical polarization.

12. The method according to any one of claims 1 to 7, wherein the method is applied in 802.11ay system.

13. A method for indicating an antenna polarization direction in a wireless network, comprising:
receiving, by a target station from a source station, polarization information of the source station and polarization information recommended to the target station for receiving by the target station; and
sending, by the target station, a message to the source station, wherein the message comprises polarization information of the target station and polarization information of the source station that is acknowledged or negotiated by the target station.

14. An apparatus (1000), comprising a processor (1003) and a memory (1002) storing a program, the program when executed by the processor (1003), instruct the apparatus (1000) to perform the method according to any one of claims 1 to 13.

15. A computer readable storage medium, comprising an instruction, wherein when the instruction runs on a computer, the computer performs the method according to any one of claims 1 to 13.

## Patentansprüche

1. Verfahren zum Angeben einer Antennenpolarisationsrichtung in einem Drahtlosnetzwerk, das Folgendes umfasst:
Senden, durch eine Quellstation an eine Zielstation, von Polarisationsinformationen der Quellstation und Polarisationsinformationen, die der Zielstation zum Empfangen durch die Zielstation empfohlen werden; und
Empfangen, durch die Quellstation, einer durch die Zielstation gesendeten Nachricht, wobei die Nachricht Polarisationsinformationen der Zielstation und Polarisationsinformationen der Quellstation umfasst, die durch die Zielstation bestätigt oder verhandelt werden.

2. Verfahren nach Anspruch 1, wobei das Senden Folgendes umfasst:
Senden, durch die Quellstation, eines Beacon Frame, wobei der Beacon Frame ein Polarisationsinformationselement umfasst und das Polarisationsinformationselement die Polarisationsinformationen der Quellstation und die Polarisationsinformationen umfasst, die der Zielstation zum Empfangen empfohlenen werden.

3. Verfahren nach Anspruch 1, wobei das Senden Folgendes umfasst:
Senden, durch die Quellstation, eines Single-User-Multiple-Input-und-Multiple-Output-Setup(single user multiple-input multiple-output setup - SU-MIMO)-Frames, wobei das SU-MIMO-Setup-Frame die Polarisationsinformationen der Quellstation und die Polarisationsinformationen umfasst, die der Zielstation zum Empfangen empfohlen werden.

4. Verfahren nach Anspruch 1, wobei das Senden Folgendes umfasst:
Senden, durch die Zielstation, des SU-MIMO-Setup-Frames, wobei das SU-MIMO-Setup-Frame die bestätigten Polarisationsinformationen der Quellstation und die Polarisationsinformationen der Zielstation umfasst.

5. Verfahren nach Anspruch 1, wobei das Senden Folgendes umfasst:
Senden mehrerer MU-MIMO-Setup-Frames, wobei die mehreren MU-MIMO-Setup-Frames nacheinander eine Polarisationsrichtung der Quellstation und die Polarisationsinformationen umfassen, die der Zielstation zum Empfangen empfohlen werden.

6. Verfahren nach Anspruch 1, wobei das Senden Folgendes umfasst:
Senden, eines Request-to-Send(RTS)-Frames, durch die Quellstation, wobei ein Steueranhängerfeld des RTS-Frames die Polarisationsinformationen der Quellstation und die Polarisationsinformationen umfasst, die der Zielstation zum Empfangen empfohlen werden, und
wobei das Empfangen Folgendes umfasst:
Empfangen, durch die Quellstation, eines Clear-to-Send(CTS)-Frames von der Zielstation, falls die Zielstation mit einer Einstellung der Quellstation übereinstimmt, wobei ein Steueranhängerfeld des CTS-Frames die Polarisationsinformationen der Zielstation und die bestätigten Polarisationsinformationen der Quellstation umfasst; oder
Empfangen, durch die Zielstation, eines Denial-to-Send(DTS)-Frames, falls die Zielstation mit der Quellstation verhandelt, wobei ein Steueranhängerfeld des DTS-Frames einen neuen empfohlenen Wert der Polarisationsinformationen der Quellstation umfasst und das Verfahren ferner Folgendes umfasst: erneutes Durchführen einer Verhandlung und Wiederholen eines Verhandlungsschritts.

7. Verfahren nach Anspruch 6, wobei das DTS-Frame durch das CTS-Frame ersetzt wird.

8. Verfahren nach einem der Ansprüche 1 bis 7, wobei die Polarisationsinformationen der Quellstation eine Polarisationsart der Quellstation angeben; und die Polarisationsinformationen, die der Zielstation zum Empfangen empfohlen werden, der Zielstation eine empfohlene Polarisationsart zum Empfangen angeben.

9. Verfahren nach Anspruch 8, wobei das Verfahren ferner das Senden einer Polarisationsangabe umfasst, die angibt, ob die Polarisationsinformationen der initiierenden Station/Zielstation ein Bit oder zwei Bits umfassen.

10. Verfahren nach Anspruch 9, wobei die Polarisationsinformationen der Quellstation ein Bit umfassen und die Polarisationsart Folgendes umfasst: eine zirkulare Polarisation oder eine lineare Polarisation; oder
die Polarisationsinformationen der Quellstation zwei Bits umfassen und die Polarisationsart Folgendes umfasst: rechtszirkulare Polarisation, linkszirkulare Polarisation, horizontale Polarisation oder vertikale Polarisation.

11. Verfahren nach Anspruch 9, wobei die Polarisationsinformationen, die der Zielstation empfohlen werden, ein Bit umfassen und die Polarisationsart Folgendes umfasst: eine zirkulare Polarisation oder eine lineare Polarisation; oder
die Polarisationsinformationen, die der Zielstation empfohlen werden, zwei Bits umfassen und die Polarisationsart Folgendes umfasst: rechtszirkulare Polarisation, linkszirkulare Polarisation, horizontale Polarisation oder vertikale Polarisation.

12. Verfahren nach einem der Ansprüche 1 bis 7, wobei das Verfahren in einem 802.11ay-System angewendet wird.

13. Verfahren zum Angeben einer Antennenpolarisationsrichtung in einem Drahtlosnetzwerk, das Folgendes umfasst:
Empfangen, durch eine Zielstation von einer Quellstation, von Polarisationsinformationen der Quellstation und Polarisationsinformationen, die der Zielstation zum Empfangen durch die Zielstation empfohlen werden; und
Senden, durch die Zielstation, einer Nachricht an die Quellstation, wobei die Nachricht Polarisationsinformationen der Zielstation und Polarisationsinformationen der Quellstation umfasst, die durch die Zielstation bestätigt oder verhandelt werden.

14. Vorrichtung (1000), die einen Prozessor (1003) und einen Speicher (1002) umfasst, der ein Programm speichert, wobei das Programm, wenn es durch den Prozessor (1003) ausgeführt wird, die Vorrichtung (1000) anweist, das Verfahren nach einem der Ansprüche 1 bis 13 durchzuführen.

15. Computerlesbares Medium, das eine Anweisung umfasst, wobei, wenn die Anweisung auf einem Computer läuft, der Computer das Verfahren nach einem der Ansprüche 1 bis 13 durchführt.

## Revendications

1. Procédé destiné à indiquer une direction de polarisation d'antenne dans un réseau sans fil, comprenant :
l'envoi, par une station source à une station cible, d'informations de polarisation de la station source et d'informations de polarisation recommandées à la station cible en vue d'une réception par la station cible ; et
la réception, par la station source, d'un message envoyé par la station cible, le message comprenant des informations de polarisation de la station cible et des informations de polarisation de la station source qui sont acquittées ou négociées par la station cible.

2. Procédé selon la revendication 1, l'envoi comprenant :
l'envoi, par la station source, d'une trame de balise, la trame de balise comprenant un élément d'information de polarisation, et l'élément d'information de polarisation comprenant les informations de polarisation de la station source et les informations de polarisation recommandées à la station cible en vue d'une réception.

3. Procédé selon la revendication 1, l'envoi comprenant :
l'envoi, par la station source, d'une trame de configuration à entrées multiples et à sorties multiples mono-utilisateur, configuration SU-MIMO, la trame de configuration SU-MIMO comprenant des informations de polarisation de la station source et des informations de polarisation recommandées à la station cible en vue d'une réception.

4. Procédé selon la revendication 1, l'envoi comprenant :
l'envoi, par la station cible, de la trame de configuration SU-MIMO, la trame de configuration SU-MIMO comprenant les informations de polarisation acquittées de la station source et les informations de polarisation de la station cible.

5. Procédé selon la revendication 1, l'envoi comprenant :
l'envoi d'une pluralité de trames de configuration MU-MIMO, la pluralité de trames de configuration MU-MIMO comprenant de manière séquentielle une direction de polarisation de la station source et les informations de polarisation recommandées à la station cible en vue d'une réception.

6. Procédé selon la revendication 1, l'envoi comprenant :
l'envoi d'une trame de demande d'envoi, RTS, par la station source, un champ de fin de commande de la trame RTS comprenant les informations de polarisation de la station source et les informations de polarisation recommandées à la station cible pen vue d'une réception ; et
la réception, comprenant :
la réception, par la station source, d'une trame d'autorisation d'envoi, CTS, provenant de la station cible si la station cible est d'accord avec un réglage de la station source, un champ de fin de commande de la trame CTS comprenant les informations de polarisation de la station cible et les informations de polarisation confirmées de la station source ; ou
la réception, par la station cible, d'une trame de refus d'envoyer, DTS, si la station cible négocie avec la station source, un champ de fin de commande de la trame DTS comprenant une nouvelle valeur recommandée des informations de polarisation de la station source, et un procédé comprenant en outre : la réalisation à nouveau d'une négociation et la répétition d'une étape de négociation.

7. Procédé selon la revendication 6, dans lequel la trame DTS est remplacée par la trame CTS.

8. Procédé selon l'une quelconque des revendications 1 à 7, dans lequel les informations de polarisation de la station source indiquent un type de polarisation de la station source ; et les informations de polarisation recommandées à la station cible en vue d'une réception indiquent un type de polarisation recommandé à la station cible en vue d'une réception.

9. Procédé selon la revendication 8, dans lequel le procédé comprend en outre l'envoi d'une indication de polarisation indiquant si les informations de polarisation de la station d'amorçage / station cible comprennent un bit ou deux bits.

10. Procédé selon la revendication 9, dans lequel les informations de polarisation de la station source comprennent un bit, et le type de polarisation comprend : une polarisation circulaire ou une polarisation linéaire ; ou
les informations de polarisation de la station source comprennent deux bits, et le type de polarisation comprend : une polarisation circulaire à droite, une polarisation circulaire à gauche, une polarisation horizontale ou une polarisation verticale.

11. Procédé selon la revendication 9, dans lequel les informations de polarisation recommandées à la station cible comprennent un bit, et le type de polarisation comprend : une polarisation circulaire ou une polarisation linéaire ; ou
les informations de polarisation recommandées à la station cible comprennent deux bits, et le type de polarisation comprend : une polarisation circulaire à droite, une polarisation circulaire à gauche, une polarisation horizontale ou une polarisation verticale.

12. Procédé selon l'une quelconque des revendications 1 à 7, dans lequel le procédé est appliqué dans le système 802.11ay.

13. Procédé destiné à indiquer une direction de polarisation d'antenne dans un réseau sans fil, comprenant :
la réception, par une station cible à partir d'une station source, d'informations de polarisation de la station source et d'informations de polarisation recommandées à la station cible en vue d'une réception par la station cible ; et
l'envoi, par la station cible, d'un message à la station source, le message comprenant des informations de polarisation de la station cible et des informations de polarisation de la station source qui sont acquittées ou négociées par la station cible.

14. Appareil (1000), comprenant un processeur (1003) et une mémoire (1002) stockant un programme, le programme lorsqu'il est exécuté par le processeur (1003), donnant l'ordre à l'appareil (1000) d'effectuer le procédé selon l'une quelconque des revendications 1 à 13.

15. Support de stockage lisible par ordinateur comprenant une instruction, lorsque l'instruction s'exécute sur un ordinateur, l'ordinateur effectuant le procédé selon l'une quelconque des revendications 1 à 13.
